# EUROPÄISCHE PATENTSCHRIFT

(11) **EP 2 267 320 B1**
(45) Veröffentlichungstag und Bekanntmachung des Hinweises auf die Patenterteilung: **06.03.2013**
(21) Anmeldenummer: 10006577.0
(22) Anmeldetag: 24.06.2010
(51) Int. Cl.: F16B 5/02

(54) **Befestigungselement**
Fastening element
Elément de fixation

(30) Priorität: 27.06.2009 DE 102009030799
(43) Veröffentlichungstag der Anmeldung: 29.12.2010
(73) Patentinhaber: Contecta GmbH, 55481 Kirchberg (DE)
(72) Erfinder: Dillig, Ralf, 56288 Bell-Wohnroth (DE)
(74) Vertreter: Müller, Jochen

(56) Entgegenhaltungen:
- DE-U1- 20 116 248
- DE-U1- 20 204 148
- DE-U1- 20 308 129
- FR-A1- 2 727 479

## Beschreibung

Die Erfindung bezieht sich auf ein quaderförmiges Befestigungselement mit einem insbesondere rechteckförmigen Querschnitt, dem ein senkrecht zu den Grundflächen ausgerichtetes Gewinde für eine Schraube zugeordnet ist, wobei von einer Grundfläche des Befestigungselementes zwei zueinander beabstandete Befestigungshaken abgehen, die sich über die Breite des Befestigungselementes erstrecken, und parallel ausgerichtete Einhängenuten ausbilden, und ein Befestigungssystem mit einem Befestigungselement.

Die DE 20 2008 011 312 U1 offenbart ein Verriegelungssystem zum Verriegeln mindestens eines flächigen Solarmoduls an parallel zueinander verlaufenden Stützprofilen. An der den Stützprofilen zugewandten Unterseite des Solarmoduls sind zu den Stützprofilen korrespondierende Halteprofile angebracht, über die sich das Solarmodul an den Halteprofilen abstützt. Eine aus Haltenasen bestehende Halteeinrichtung ist vorgesehen, von denen jeweils eine erste Haltenase an jedem Stützprofil im Wesentlichen längs zu dessen Oberkante und quer zu dessen Erstreckungsrichtung vorsteht, während an jedem Halteprofil in Querrichtung zur Erstreckung desselben und parallel sowie beabstandet zur Unterseite des zugeordneten Solarmoduls jeweils eine zweite Haltenase angeordnet ist, die bei einem auf dem Halteprofil aufliegenden Solarmodul in einer zur ersten Haltenase entgegengesetzte Richtung vorsteht. Während der Montage eines Solarmoduls übergreifen durch Verschieben des Solarmoduls quer zu den Stützprofilen und in Richtung der ersten Haltenasen die ersten Haltenasen die zweiten Haltenasen und wirken derart zusammen, dass ein Hochheben des Solarmoduls von den Stützprofilen verhindert ist. Zum Verriegeln des Solarmoduls mit den Stützprofilen weisen dieselben an der dem betreffenden Solarmodul zugewandten Oberseite eine sich in Profillängsrichtung erstreckende Verriegelungsnut auf, der im fertig montierten Zustand des Solarmoduls eine zweite Verriegelungsnut gegenüberliegt, die in die der Oberseite der der Stützprofile zugewandte Unterseite der Halteprofile eingearbeitet ist. In den von den beiden Nuten abgegrenzten Innenkanal ist von der Seite des fertig montierten Solarmoduls aus ein Verriegelungsfinger einschiebbar, der im eingeschobenen Zustand ein Auseinanderbewegen der miteinander in Eingriff stehenden ersten und zweiten Haltenasen verhindert. Diese Art Klipsverbindung ist in der Praxis aufgrund der thermisch bedingten Längenänderung von Aluminiumprofilen, die in der Regel im Zusammenhang mit Solarmodulen verwendet werden, problematisch. Im Weiteren erscheint eine zerstörungsfreie Demontage zum Auswechseln schadhafter Solarmodule nahezu unmöglich.

Im Weiteren ist auch der DE 20 2004 015 811 U1 eine Befestigungsvorrichtung für einen Sonnenkollektor mit einer Abwinklung an der Unterseite eines einfassenden Rahmens bekannt, die mindestens eine Trägerschiene zur Befestigung auf zugeordneten Dachhaken umfasst. Ein in oder an einer U-förmigen Profilschiene geführtes Unterteil ist über mindestens eine einen mit mindestens einer Sollbruchstelle versehenen Steg am Unterteil oder an einem Distanzelement auf Abstand zu einem in den Rahmen des Sonnenkollektors eingreifenden Oberteil gehalten. Mindestens eine die Teile vertikal durchgreifende Schraube bewirkt bei der Montage eine Vorspannkraft, durch die der Steg am Unterteil oder am Distanzelement an der Sollbruchstelle bricht. Aufgrund des Bruches ist eine weitere Verwendung der Teile, z.B. nach einem versehentlichen Anziehen der Schraube oder einem Austausch von schadhaften Sonnenkollektoren, nicht möglich.

Darüber hinaus offenbaren die Druckschriften DE 203 08 129 U1 und FR 2 727 479 A jeweils Befestigungselemente mit Klipselementen, letzere mit den Merkmalen des Oberbegriffs von Anspruch 1.

Es ist Aufgabe der Erfindung, ein Befestigungselement der eingangs genannten Art zu schaffen, das leicht und verdrehsicher montierbar ist.

Erfindungsgemäß wird die Aufgabe dadurch gelöst, dass der Rückenschenkel des ersten Befestigungshakens eine Verlängerung einer Stirnseite des Befestigungselementes bildet und das freie Ende des Hakenschenkels des zweiten Befestigungshakens in einer Ebene mit der gegenüberliegenden Stirnseite endet, wobei vorzugsweise der Rückenschenkel des zweiten Befestigungshakens an das Gewinde für die Schraube grenzt.

Das Befestigungselement kann an beliebiger bzw. erforderlicher Stelle mittels seiner zwei Befestigungshaken verdrehsicher festgelegt werden, wodurch im Vergleich mit einer verschiebbar in ein entsprechendes Profil eingelegten Gleitmutter, eine wesentliche Vereinfachung der Montage sowohl des Befestigungselementes als auch daran beispielsweise über das Gewinde anzuordnender Gegenstände gegeben ist. Das Gewinde kann zur Aufnahme einer Befestigungs- und/oder Klemmschraube oder dergleichen dienen. Das vorzugsweise aus Aluminium gefertigte Befestigungselement kann in benötigter Länge einfach von einem Stabprofil mit entsprechender Kontur abgelängt werden und lediglich das Gewinde oder eine Durchgangsbohrung für eine Schraube, die mit dem dem Befestigungsprofil beispielsweise in Form einer Mutter zugeordneten Gewinde zusammenwirkt, wird separat gefertigt. Eine in das Gewinde eingesetzte Schraube kann zwischen den beiden Befestigungshaken eine Last aufnehmen und/oder eine Klemmkraft bewirken. Das Gewinde muss nicht in dem Befestigungselement selbst ausgebildet sein. Das Befestigungselement kann beispielsweise eine Durchgangsbohrung aufweisen, die mit einem zugeordneten Gewinde in einem separaten Bauteil, insbesondere einer Mutter, fluchtet. Im Weiteren ist es durch diese geometrische Ausgestaltung relativ einfach möglich, das Befestigungselement aus einem quaderförmigen Grundkörper mittels spanender Bearbeitung zu fertigen. Auch eine Herstellung des Befestigungselementes durch Ziehen oder Strangpressen oder dergleichen ist möglich, wobei insbesondere ein Profil, das im Wesentlichen den Grundkörper und die Haken im Querschnitt zeigt, als Stab gefertigt werden kann. Nach einem Trennen des Stabes in entsprechend gewünschter Länge liegen einzelne Befestigungselemente vor, die beliebig weiterbearbeitet werden können.

Um das Einhängen des Befestigungselementes einfach handhabbar zu gestalten, gehen zweckmäßigerweise die Befestigungshaken mit ihren Rückenschenkeln von der Grundfläche ab und Hakenschenkel zur Bildung der Einhängenuten weisen in die gleiche Richtung.

Bevorzugt ist das Gewinde Bestandteil einer Mutter, die drehfest in einer hinterschnittenen Nut aufgenommen ist und die der den Einhängenuten zugewandten Grundfläche gegenüberliegende Auflagefläche weist eine Durchgangsbohrung für die Schraube auf. Ist beispielsweise das Befestigungselement aus Aluminium gefertigt, dann wirkt sich ein Gewinde einer aus Stahl gefertigten Mutter positiv auf die Festigkeit und die Verschleißfestigkeit aus. Im Weiteren kann die Mutter bei einer Beschädigung des Gewindes einfach ausgetauscht werden. Selbstverständlich ist auch möglich, das Gewinde direkt in das Befestigungselement einzuarbeiten.

Ein erfindungsgemäßes Befestigungssystem umfasst ein zuvor erläutertes Befestigungselement und einen Profilstab, der mindestens zwei zu den Einhängenuten korrespondierende Hinterschnitte aufweist.

Der Profilstab kann beispielsweise mittelbar oder unmittelbar auf einem beliebigen Untergrund festgelegt werden und/oder Bestandteil eines Gestells bzw. Rahmens sein. Um an dem Profilstab einen Gegenstand festzulegen, wird das Befestigungselement mit seinen beiden parallel ausgerichtete Einhängenuten ausbildenden Befestigungshaken an den Hinterschnitten des Profilstabes zunächst an erforderlicher Stelle eingehängt und ist demnach drehfest und verschiebbar an dem Profilstab gehalten. An dem Befestigungselement selbst kann wiederum der Gegenstand, insbesondere ein thermisches Solar- bzw. Photovoltaik-Modul, oder ein weiterer Profilstab, auch in beliebigem Winkel dazu verlaufend, angeordnet werden.

Vorzugsweise sind die Hinterschnitte durch zwei parallele Nuten in einem quaderförmigen Hohlprofil oder mindestens eine hinterschnittene Befestigungsnut und insbesondere einen zugeordneten, vorzugsweise randseitigen, Eingriff gebildet. Bei dem Hohlprofil kann es sich insbesondere um ein Rechteck- oder Vierkantrohr handeln. Selbstverständlich sind andere Querschnitte, beispielsweise Sechs- oder Mehrkantrohre oder zylindrische Rohre, nicht ausgeschlossen. Die Anzahl hinterschnittener und parallel zueinander verlaufender Befestigungsnuten, denen gegebenenfalls Eingriffe für die Einhängenuten zugeordnet sind, ist abhängig von der Anzahl festzulegender Befestigungselemente bzw. deren Größe.

Vorteilhafterweise weist der Profilstab einen rechteckförmigen Querschnitt auf, der im wesentlichen durch eine Ober-, eine Unter- und zwei Längsseiten begrenzt ist, wobei zur Bildung von mindestens einer Befestigungsnut und/oder mindestens einem Eingriff im Bereich der Ober- und/oder Unterseite und/oder den Längsseiten jeweils mindestens ein T-Profil geformt ist. Jede Befestigungsnut weist einen T-förmigen Querschnitt auf und die seitlichen Eingriffe sind im Wesentlichen als rechteckförmige Einstiche ausgebildet. Die Hinterschnitte der Befestigungsnuten sind durch die randseitige Gestaltung in Form eines T, insbesondere bei einer Fertigung durch Ziehen oder Strangpressen, relativ einfach zu fertigen.

Nach einer Weiterbildung ist die den zweiten Befestigungshaken des Befestigungselementes aufnehmende Nut oder Befestigungsnut in ihrer Breite derart bemessen, dass die Schraube eindrehbar ist. Ist das Befestigungselement mit seinen Befestigungshaken in den Profilstab eingehängt und die Schraube lose derart tief in das Befestigungselement eingedreht, dass sie in die entsprechende Nut bzw. Befestigungsnut eingreift, ist aufgrund der Abmessungen das Befestigungselement zwar verschiebbar aber nicht aushängbar an dem Profilstab gehalten, wodurch die Montage weitergehend vereinfacht ist.

Um einen Profilstab mit einfachen Mitteln auf einem Unterbau zu befestigen, weist vorzugsweise ein Flachprofil mit mehren randseitigen Durchgangsbohrungen zwei parallel zueinander beabstandete Führungsnasen für den Profilstab auf. Das Flachprofil kann beispielsweise auf einem Flachdach, einer Fassade oder auf Sparren eines Hauses befestigt werden, indem Schrauben oder Nägel durch die Durchgangsbohrungen getrieben werden. Beispielsweise findet das Flachprofil bei einem mit einem Trapezblech gedeckten Dach Verwendung.

Zweckmäßigerweise sind die Führungsnasen zum Einführen in die randseitigen Eingriffe des Profilstabs bemessen. Der Profilstab wird mit seinen randseitigen Eingriffen zwischen die Führungsnasen geschoben und ist so an dem das Flachprofil tragenden Unterbau befestigt. An dem Flachprofil ist ein sich über eine der Führungsnasen senkrecht hinauserstreckender Flansch angeformt. Der Flansch erstreckt sich in den Bereich einer Seitenwandung des Profilstabs. Wird durch den Flansch und den Profilstab in der montierten Endlage ein Loch gebohrt, kann unter Verwendung einer Schraube oder eines Niets ein gegenseitiges Verlagern verhindert werden.

In weiterer Ausgestaltung ist ein Dachhaken mit dem Befestigungselement gekoppelt, insbesondere über einen Montagewinkel, der zum einen mit dem Dachhaken und zum anderen mit dem Befestigungselement verbunden ist. In den Profilstab wird ein Befestigungselement mit einer stiftförmigen Schraube eingesetzt, die in eine Bohrung eines mit dem Dachhaken fest verbundenen Montagewinkels eingreift. Die Schraube klemmt zum einen das Befestigungselement an dem Profilstab und ist zum anderen durch mindestens eine entsprechende Mutter an dem Montagewinkel befestigt. In der Annahme, dass sich der Dachhaken auf der Unterseite des Profilstabes befindet, kann auf der Oberseite mindestens ein weiteres Befestigungselement angeordnet werden, um einen Gegenstand zu haltern.

Zur klemmenden Befestigung eines oder mehrerer benachbarter Rahmenelemente, insbesondere von Solarmodulen, ist bevorzugt das Befestigungselement mit einem entweder hakenförmigen oder im Wesentlichen U-förmigen Klemmelement verbunden. Zweckmäßigerweise haltert das Klemmelement mindestens einen Gegenstand an dem Profilstab, insbesondere mittels der Schraube, mit der das Befestigungselement festgelegt ist. Vorzugsweise weist das Klemmelement mindestens einen Ansatz auf, der auf dem zu halternden Gegenstand aufliegt. Das Klemmelement kann demnach beispielsweise hakenförmig sein.

Zur Vereinfachung der Montage ist das Klemmelement mittels einer auf die Schraube aufgesteckten Klemmscheibe oder Feder gegenüber dem Befestigungselement auf Distanz gehalten. Demnach ist es möglich, zunächst das Befestigungselement bequem an dem Profilstab einzuhängen, das zu klemmende Rahmenelement zwischen dem Profilstab und dem Ansatz des Klemmelementes anzuordnen und anschließend durch Anziehen der Schraube das Rahmenelement klemmend zu befestigen. Vorzugsweise ist ein Solarmodul befestigbar.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand mehrerer Ausführungsbeispiele unter Bezugnahme auf die zugehörigen Zeichnungen näher erläutert. Es zeigt:
- Fig.1: eine perspektivische Darstellung eines erfindungsgemäßen Befestigungssystems mit einem erfindungsgemäßen Befestigungselement,
- Fig.2: eine Seitenansicht der Darstellung nach Fig. 1,
- Fig.3: eine vergrößerte Darstellung der Einzelheit III nach Fig. 2,
- Fig.4: eine perspektivische Darstellung des Befestigungssystems nach Fig. 1 in alternativer Ausgestaltung,
- Fig.5: eine vergrößerte Darstellung der Einzelheit V nach Fig. 4,
- Fig.6: eine Seitenansicht der Darstellung nach Fig. 5,
- Fig.7: eine weitere Seitenansicht der Darstellung nach Fig. 4,
- Fig.8: eine perspektivische Darstellung des Befestigungssystems nach Fig. 1 in weiterer alternativer Ausgestaltung,
- Fig.9: eine Schnittdarstellung des Befestigungssystems nach Fig. 8,
- Fig.10: eine Vorderansicht eines Profilstabes des Befestigungssystems nach Fig. 1 in erster alternativer Ausgestaltung,
- Fig.11: eine Vorderansicht des Profilstabes des Befestigungssystems nach Fig. 1 in zweiter alternativer Ausgestaltung,
- Fig.12: eine Vorderansicht des Profilstabes des Befestigungssystems nach Fig. 1 in dritter alternativer Ausgestaltung und
- Fig.13: eine alternative Darstellung des Befestigungssystems nach Fig. 9.

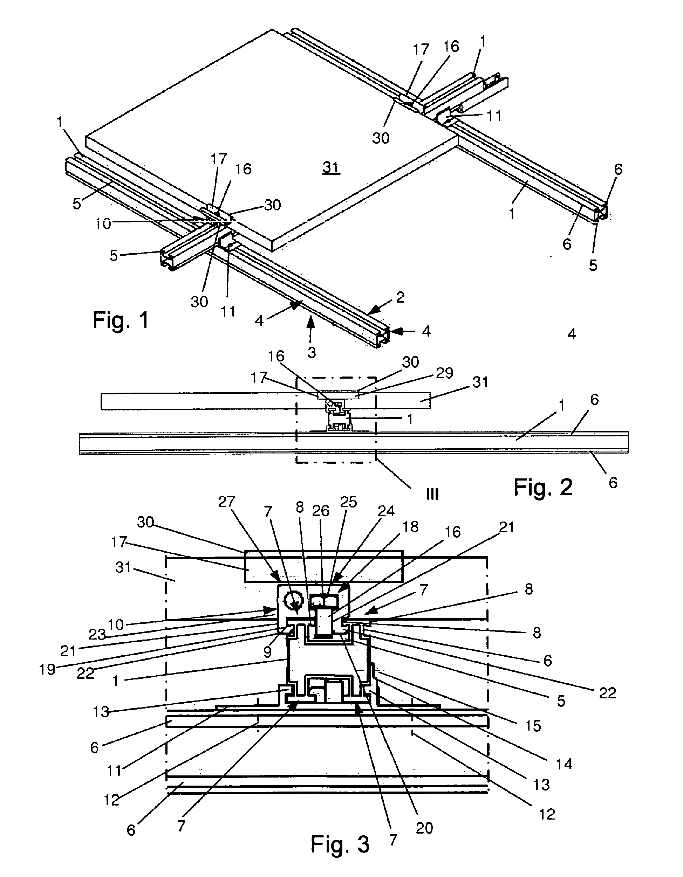

Das Befestigungssystem umfasst gemäß den Fig. 1 bis 3 mehrere Profilstäbe 1 mit einem rechteckförmigen, insbesondere quadratischen, Querschnitt, der im Wesentlichen durch eine Oberseite 2, eine Unterseite 3 und zwei Längsseiten 4 begrenzt ist. Zur Ausgestaltung jeweils einer Befestigungsnut 5 im Bereich der Ober- und Unterseite 2, 3 sowie jeweils zwei randseitigen Eingriffen 6 in den Längsseiten 4 im Bereich der Ober- und Unterseite 2, 3 sind jeweils im Eckbereich des Profilstabs T-Profile 7 geformt, die in Abhängigkeit von dem Fertigungsverfahren zur Herstellung des Profilstabs 1 entweder massiv oder als filigrane Stegstruktur gestaltet sind. Die hinterschnittenen Befestigungsnuten 5 und die längsseitigen Eingriffe 6 bilden Hinterschnitte 8, die von Einhängenuten 9 des Befestigungselementes 10 aufgenommen werden.

Zur Montage eines Gestells mit kreuzweise zueinander ausgerichteten Profilstäben 1 ist ein Flachprofil 11 mit zwei randseitigen Durchgangsbohrungen 12 vorgesehen, von dessen Grundfläche zwei parallel zueinander beabstandete Führungsnasen 13 abgehen, die derart bemessen sind, dass sie in die längsseitigen Eingriffe 6 des Profilstabs 1 eingreifen. Im Bereich der einen Führungsnase 13 erstreckt sich ein Flansch 14 über die Führungsnasen 13 senkrecht hinaus. Im Bereich des Flansches 14 besteht die Möglichkeit, den zwischen die Führungsnasen 13 eingeschobenen Profilstab 1 mittels einer Querschraube 15 oder eines Nietes gegen Verschieben zu sichern. Das Flachprofil 11 kann über die Durchgangsbohrungen 12 mittels Schrauben oder Nieten oder auch durch Schweißen an einem Profilstab 1 oder einem beliebigen anderen Untergrund befestigt werden.

Das Befestigungselement 10 kann als eine Einheit mit einer Schraube 16 und einem daran festgelegten Klemmelement 17 bereitgestellt werden und weist einen im Wesentlichen rechteckförmigen Querschnitt auf, wobei ein senkrecht zu den Grundflächen und den Einhängenuten 9 des Befestigungselementes 10 ausgerichtetes Gewinde 18 für die Schraube 16 vorgesehen ist. Um die parallel ausgerichteten Einhängenuten 9, die mit dem Hinterschnitten 8 des Profilstabs 1 zusammenwirken, auszubilden, gehen von der einen Grundfläche zwei zueinander beabstandete Befestigungshaken 19, 20 ab, wobei Rückenschenkel 21 der Befestigungshaken 19, 20 an der Grundfläche angeformt sind und Hakenschenkel 22 zur Bildung der Einhängenuten 9 in die gleiche Richtung weisen. Hierbei bildet der Rückenschenkel 21 des ersten Befestigungshakens 19 eine Verlängerung einer Stirnseite 23 des Befestigungselementes 10 und das freie Ende des Hakenschenkels 22 des zweiten Befestigungshakens 20 endet in einer Ebene mit der gegenüberliegenden Stirnseite 23. Der Rückenschenkel 20 des zweiten Befestigungshakens 20 ist zu dem Hakenschenkel 22 des ersten Befestigungshakens 19 beabstandet. Die mit dem Befestigungselement 10 verbundene Schraube 16 durchragt eine Durchgangsbohrung 24 und ist in eine drehfest in einer hinterschnittenen Nut 25 aufgenommenen Mutter 26 eingedreht. Die Schraube 16 kann eine Länge aufweisen, um das Befestigungselement 10 an dem Profilstab 1 klemmend zu befestigen, indem sie mit ihrem freien Ende den Grund der Befestigungsnut 5 beaufschlagt. Oberhalb einer Auflagefläche 27 des Befestigungselementes 10 ist mit der Schraube 16 das im Wesentlichen U-förmige Klemmelement 17 gehalten, das an den freien Enden seiner U-Schenkel 29 jeweils einen Ansatz 30 aufweist, um durch die von der Schraube 16 ausgeübte Klemmkraft ein Solarmodul 31 gegen den das Befestigungselement 10 halternden Profilstab 1 zu pressen. Selbstverständlich können an Stelle des Solarmoduls 31 auch beliebige andere flächige Gegenstände, wie beispielsweise Verkleidungsteile für Fassaden, Werbetafeln oder dergleichen befestigt werden.

Bei der Montage werden zunächst mindestens zwei Profilstäbe 1 parallel und beabstandet zueinander auf einem Untergrund bzw. gestellfest angeordnet und jeweils mit Flachprofilen 11 bestückt, wobei zwischen die Führungsnasen 13 von fluchtenden Flachprofilen 11 weitere Profilstäbe 1 senkrecht zu den bereits festgelegten Profilstäben 1 eingeschoben und beispielsweise mittels die Flansche 14 der Flachprofile 11 durchragender Querschrauben 15 gegen Verschiebung gesichert werden. An den weiteren Profilstäben 1 werden Befestigungselemente 10 mit zugeordneten Klemmelementen 17 angeordnet, wobei die Schraube 16 jedes Befestigungselementes 10 zunächst derart weit in die Mutter 26 eingeschraubt ist, dass ihr freies Ende nicht in die Befestigungsnut 5 ragt. Nachdem die Einhängenuten 9 des Befestigungselementes 10 in Wirkeingriff mit den Hinterschnitten 8 des Eingriffs 6 und der Befestigungsnut 5 des Profilstabes 1 gebracht wurden, wird die Schraube 16 soweit in die Mutter 26 eingeschraubt, dass sie in die Befestigungsnut 5 ragt, wonach das Befestigungselement 10 nicht aus dem Profilstab 1 aushakbar aber dennoch verschiebbar ist. Nach der Auflage und dem Ausrichten eines Solarmoduls 31 werden die entsprechenden Befestigungselemente 10 an das Solarmodul 31 geschoben und das Solarmodul 31, das als thermisches Solarelement oder Photovoltaikelement ausgebildet sein kann, durch Festziehen der Schraube 16 und damit einhergehender Wirkung des Klemmelementes 17 befestigt.

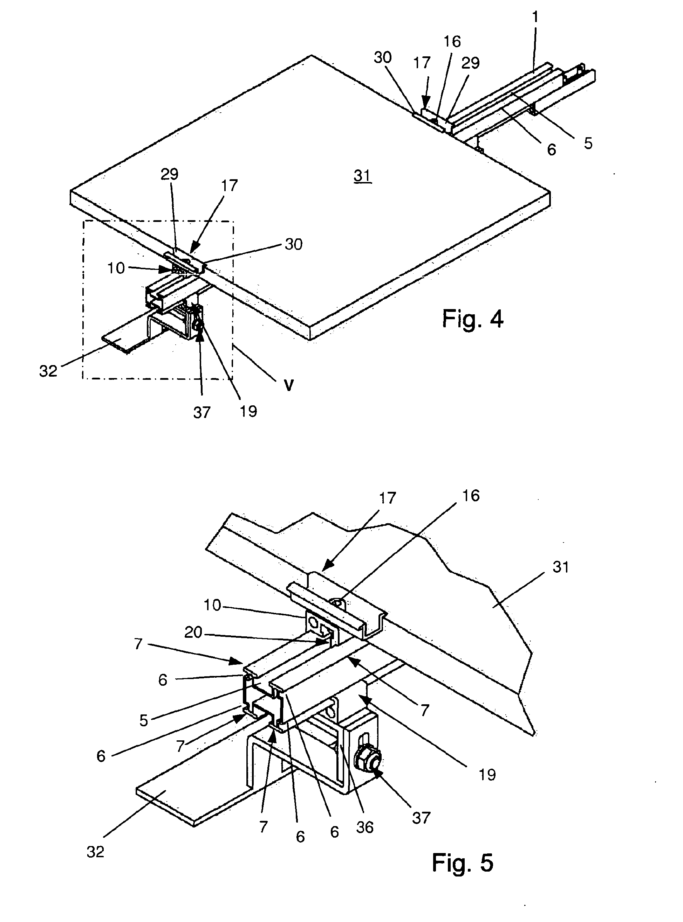

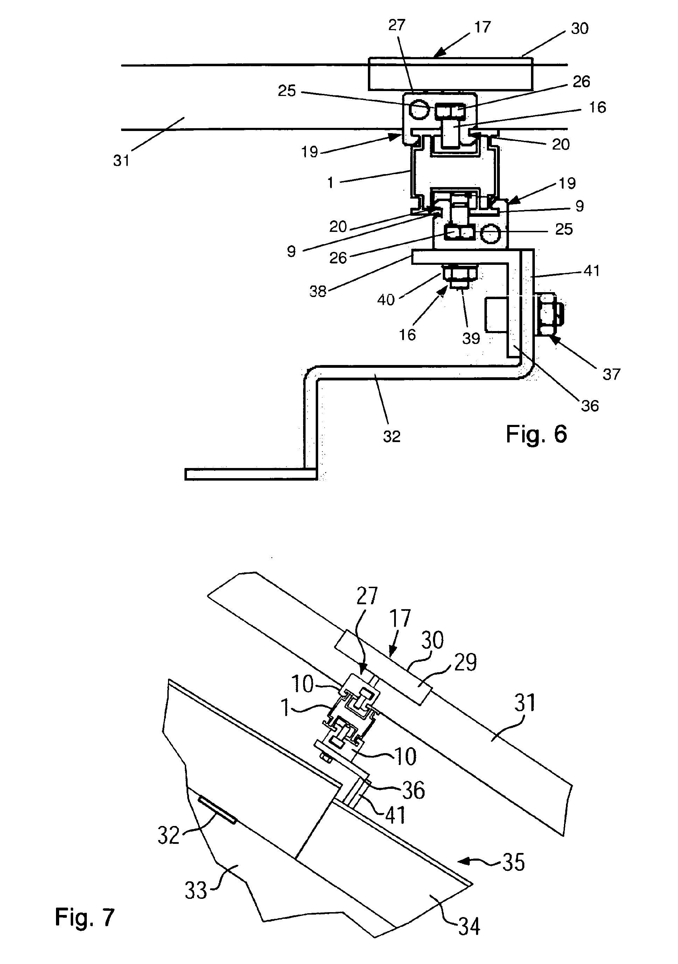

Gemäß den Fig. 4 bis 7 ist ein Profilstab 1 mittels Dachhaken 32 an Sparren 33 eines mit Ziegel 34 gedeckten Hausdaches 35 befestigt, wobei zunächst in bekannter Weise die Dachhaken 32 zueinander fluchtend festgelegt werden. An einem über die Ziegel 34 vorstehenden Schenkel 41 jedes Dachhakens 32 ist ein Montagewinkel 36 durch eine Schraubverbindung 37 angeordnet, in dessen einen Schenkel 38 die als Gewindestift 39 ausgeführte Schraube 16 des Befestigungselementes 10 eingreift und durch eine Mutter 40 festgelegt ist. In die Einhängenuten 9 des Befestigungselementes 10 greifen die Hinterschnitte 8 des Eingriffs 6 und der Befestigungsnut 5 des Profilstabes 1 ein und der Gewindestift 39 ist soweit in die in dem Befestigungselement 10 gelagerte Mutter 26 eingeschraubt, dass sie in die Befestigungsnut 5 ragt, so dass das Befestigungselement 1 nicht aus dem Profilstab 1 aushakbar ist. Auf dem Profilstab 1 werden unter Verwendung von mit Klemmelementen 17 bestückten Befestigungselementen 10 Solarmodule 31 befestigt.

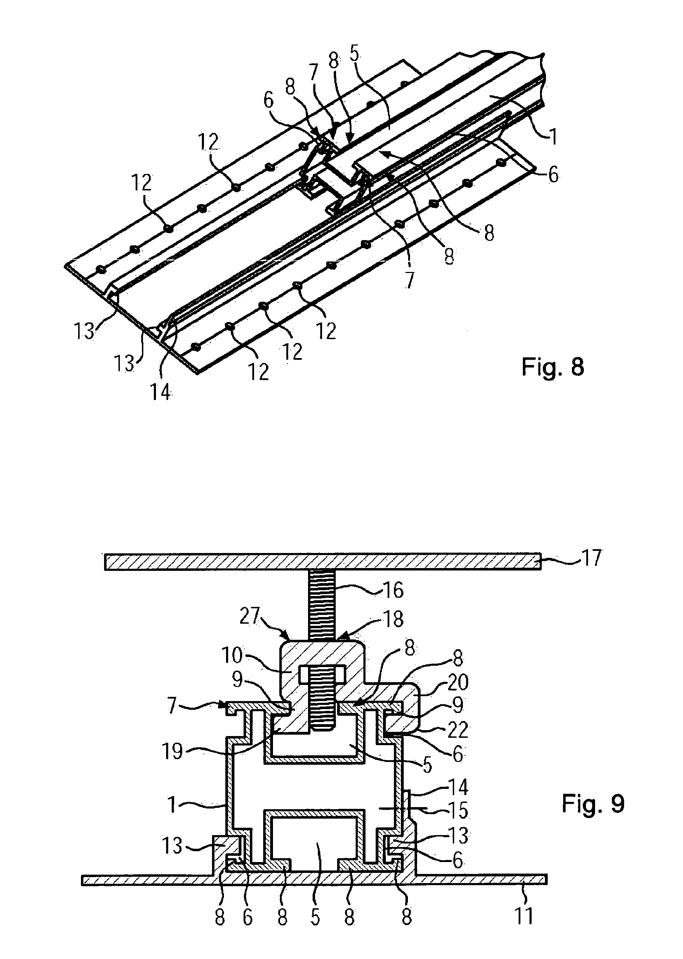

Nach den Fig. 8 und 9 erfolgt die Anordnung eines Profilstabes 1 mit einem Flachprofil 11, beispielsweise auf einem Flachdach, oder einem mit einem Blech gedeckten Dach, das an jeder seiner Längsseiten mehrere Durchgangsbohrungen 12 zur Festlegung aufweist. Das Gewinde 18 für die Schraube 16 ist unmittelbar in dem Befestigungselement 10 vorgesehen.

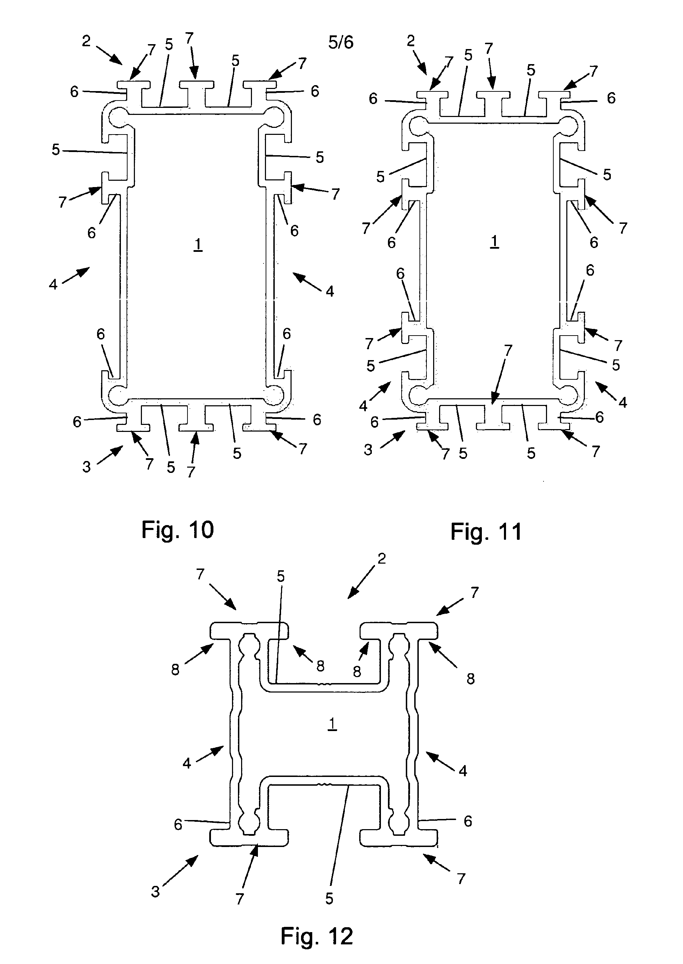

Der Profilstab 1 gemäß Fig. 10 weist einen rechteckigen Querschnitt auf und ist im Bereich seiner Oberseite 2 und Unterseite 3 jeweils mit zwei hinterschnittenen Befestigungsnuten 5 sowie zwei randseitigen Eingriffen 6 versehen, wozu drei T-Profile 7 parallel sowie beabstandet zueinander ausgeformt sind. Die Längsseiten 4 des Profilstabes 1 weisen jeweils ein T-Profil 7 zur Bildung einer hinterschnittenen Befestigungsnut 5 und einen randseitigen Eingriff 6 auf. Bei dem im Querschnitt rechteckigen Profilstab 1 nach Fig. 11 sind ebenfalls im Bereich der Oberseite 2 und Unterseite 3 jeweils zwei hinterschnittene Befestigungsnuten 5 sowie zwei randseitige Eingriffe 6 vorgesehen, die durch drei parallel sowie beabstandet zueinander angeformte T-Profile 7 gebildet sind. Im Bereich jeder Längsseite 4 sind zwei parallel sowie beabstandet zueinander ausgerichtete T-Profile 7 zur Bildung von zwei hinterschnittenen Befestigungsnuten 5 vorgesehen. Bei dem im Wesentlichen H-förmigen Profilstab 1 nach Fig. 12 ist im Bereich der Oberseite 2 und Unterseite 3 jeweils eine hinterschnittene Befestigungsnut 5 sowie zwei randseitige Eingriffe 6 vorgesehen, die durch die angeformten T-Profile 7 gebildet sind. Die Befestigungsnuten 5 und Eingriffe 6 dienen den zuvor und nachstehend erläuterten Zwecken.

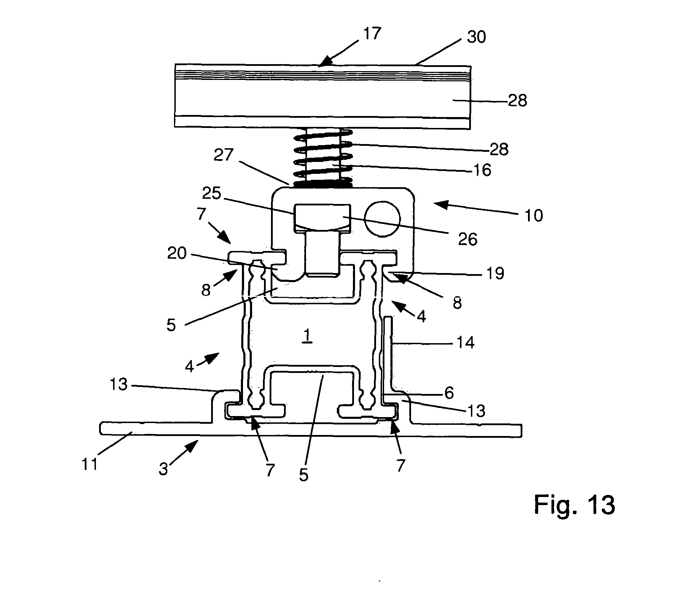

Gemäß Fig. 13 ist ein Profilstab 1 mit dem Flachprofil 11, beispielsweise auf einem Flachdach, oder einem mit einem Blech gedeckten Dach, festgelegt. Das Flachprofil 11 weist die von seiner Auflagefläche abgehenden Führungsnasen 13 auf, von denen die eine im Querschnitt hakenförmig gestaltet ist und die andere in den Flansch übergeht. Beide Führungsnasen 13 wirken mit den Hinterschnitten 8 im Bereich der zugeordneten T-Profile 7 des Profilstabes 1 zusammen, der auf seiner dem Flachprofil gegenüberliegenden Seite mit dem Befestigungselement 10 versehen ist, das das Klemmelement 17 mittels der Schraube 16 trägt. Zwischen dem Klemmelement 17 und dem Befestigungselement 10 ist eine Druckfeder 28 auf der Schraube 16 angeordnet, die das Klemmelement 17 zu dem Befestigungselement 10 beabstandet und damit in einer Position hält, die die Montage des Solarmoduls 31 erleichtert.

### Bezugszeichenliste

- 1.: Profilstab
- 2.: Oberseite
- 3.: Unterseite
- 4.: Längsseite
- 5.: Befestigungsnut
- 6.: Eingriff
- 7.: T-Profil
- 8.: Hinterschnitt
- 9.: Einhängenut
- 10.: Befestigungselement
- 11.: Flachprofil
- 12.: Durchgangsbohrung
- 13.: Führungsnase
- 14.: Flansch
- 15.: Querschraube
- 16.: Schraube
- 17.: Klemmelement
- 18.: Gewinde
- 19.: Befestigungshaken
- 20.: Befestigungshaken
- 21.: Rückenschenkel
- 22.: Hakenschenkel
- 23.: Stirnseite
- 24.: Durchgangsbohrung
- 25.: Nut
- 26.: Mutter
- 27.: Auflagefläche
- 28.: Druckfeder
- 29.: U-Schenkel
- 30.: Ansatz
- 31.: Solarmodul
- 32.: Dachhaken
- 33.: Sparren
- 34.: Ziegel
- 35.: Hausdach
- 36.: Montagewinkel
- 37.: Schraubverbindung
- 38.: Schenkel v. 36
- 39.: Gewindestift
- 40.: Mutter
- 41.: Schenkel v. 32

## Patentansprüche

1. Quaderförmiges Befestigungselement mit einem insbesondere rechteckförmigen Querschnitt, dem ein senkrecht zu den Grundflächen ausgerichtetes Gewinde (18) für eine Schraube (16) zugeordnet ist, wobei von einer Grundfläche des Befestigungselementes (10) zwei zueinander beabstandete Befestigungshaken (19, 20) abgehen, die sich über die Breite des Befestigungselementes (10) erstrecken, und parallel ausgerichtete Einhängenuten (9) ausbilden, **dadurch gekennzeichnet, dass** der Rückenschenkel (21) des ersten Befestigungshakens (19) eine Verlängerung einer Stirnseite (23) des Befestigungselementes (10) bildet und das freie Ende des Hakenschenkels (22) des zweiten Befestigungshakens (20) in einer Ebene mit der gegenüberliegenden Stirnseite (23) endet, wobei vorzugsweise der Rückenschenkel (21) des zweiten Befestigungshakens (20) an das Gewinde (18) für die Schraube (16) grenzt.

2. Befestigungselement nach Anspruch 1, **dadurch gekennzeichnet, dass** die Befestigungshaken (19, 20) mit ihren Rückenschenkeln (21) von der Grundfläche abgehen und Hakenschenkel (22) zur Bildung der Einhängenuten (9) in die gleiche Richtung weisen.

3. Befestigungselement nach Anspruch 1, **dadurch gekennzeichnet, dass** das Gewinde (18) Bestandteil einer Mutter (26) ist, die drehfest in einer hinterschnittenen Nut (25) aufgenommen ist und die der den Einhängenuten (9) zugewandten Grundfläche gegenüberliegende Auflagefläche (27) eine Durchgangsbohrung (24) für die Schraube (16) aufweist.

4. Befestigungssystem mit einem Befestigungselement (10) nach Anspruch 1 und einem Profilstab (1), der mindestens zwei zu den Einhängenuten (9) korrespondierende Hinterschnitte (8) aufweist.

5. Befestigungssystem nach Anspruch 4, **dadurch gekennzeichnet, dass** die Hinterschnitte (8) durch zwei parallele Nuten in einem quaderförmigen Hohlprofil oder mindestens eine hinterschnittene Befestigungsnut (5) und insbesondere einen zugeordneten, vorzugsweise randseitigen, Eingriff (6) gebildet sind.

6. Befestigungssystem nach Anspruch 4 oder 5, **dadurch gekennzeichnet, dass** der Profilstab (1) einen rechteckförmigen Querschnitt aufweist, der im Wesentlichen durch eine Ober- (2), eine Unter- (3) und zwei Längsseiten (4) begrenzt ist, wobei zur Bildung von mindestens einer Befestigungsnut (5) und/oder mindestens einem Eingriff (6) im Bereich der Ober- (2) und/oder Unterseite (3) und/oder den Längsseiten (4) jeweils mindestens ein T-Profil (7) geformt ist.

7. Befestigungssystem nach einem der Ansprüche 4 bis 6, **dadurch gekennzeichnet, dass** die den zweiten Befestigungshaken (20) des Befestigungselementes (10) aufnehmende Nut oder Befestigungsnut (5) in ihrer Breite derart bemessen ist, dass die Schraube (16) eindrehbar ist.

8. Befestigungssystem nach einem der Ansprüche 4 bis 7, **dadurch gekennzeichnet, dass** ein Flachprofil (11) mit mehreren randseitigen Durchgangsbohrungen (12) zwei parallel zueinander beabstandete Führungsnasen (13) für den Profilstab (1) aufweist, wobei bevorzugt die Führungsnasen (13) zum Einführen in die randseitigen Eingriffe (6) des Profilstabs (1) bemessen sind und vorteilhafterweise an dem Flachprofil (11) ein sich über eine der Führungsnasen (13) senkrecht hinauserstreckender Flansch (14) angeformt ist.

9. Befestigungssystem nach einem der Ansprüche 4 bis 7, **dadurch gekennzeichnet, dass** ein Dachhaken (32) mit dem Befestigungselement (10) gekoppelt ist, insbesondere über einen Montagewinkel (36), der zum einen mit dem Dachhaken (32) und zum anderen mit dem Befestigungselement (10) verbunden ist.

10. Befestigungssystem nach einem der Ansprüche 4 bis 7, **dadurch gekennzeichnet, dass** das Befestigungselement (10) mit einem entweder hakenförmigen oder im Wesentlichen U-förmigen Klemmelement (17) verbunden ist.

11. Befestigungssystem nach Anspruch 10, **dadurch gekennzeichnet, dass** das Klemmelement (17) mindestens einen Gegenstand an dem Profilstab (1) haltert, insbesondere mittels der Schraube (16), mit der das Befestigungselement (10) festgelegt ist.

12. Befestigungssystem nach Anspruch 10 oder 11, **dadurch gekennzeichnet, dass** das Klemmelement (17) mindestens einen Ansatz (30) aufweist, der auf dem zu halternden Gegenstand aufliegt, wobei vorzugsweise das Klemmelement (17) mittels einer auf die Schraube (16) aufgesteckten Klemmscheibe oder Feder gegenüber dem Befestigungselement (10) auf Distanz gehalten ist.

13. Befestigungssystem nach einem der Ansprüche 5 bis 14, **dadurch gekennzeichnet, dass** ein Solarmodul (31) befestigbar ist.

## Claims

1. Cuboidal fastening element having an in particular rectangular cross section, to which a thread (18), oriented perpendicularly to the base surfaces, for a screw (16) is assigned, wherein two spaced-apart fastening hooks (19, 20) project from a base surface of the fastening element (10), said fastening hooks (19, 20) extending over the width of the fastening element (10), and forming insertion grooves (9) that are oriented parallel to one another, **characterized in that** the rear limb (21) of the first fastening hook (19) forms an extension of an end side (23) of the fastening element (10) and the free end of the hook limb (22) of the second fastening hook (20) ends in a plane with the opposite end side (23), wherein preferably the rear limb (21) of the second fastening hook (20) adjoins the thread (18) for the screw (16).

2. Fastening element according to Claim 1, **characterized in that** the fastening hooks (19, 20) protrude by way of their rear limbs (21) from the base surface and hook limbs (22) for forming the insertion grooves (9) are directed in the same direction.

3. Fastening element according to Claim 1, **characterized in that** the thread (18) is a constituent part of a nut (26) which is held in a rotationally fixed manner in an undercut groove (25) and the bearing surface (27) opposite the base surface facing the insertion grooves (9) has a through-passage bore (24) for the screw (16).

4. Fastening system having a fastening element (10) according to Claim 1 and a profiled bar (1) which has at least two undercuts (8) corresponding to the insertion grooves (9).

5. Fastening system according to Claim 4, **characterized in that** the undercuts (8) are formed by two parallel grooves in a cuboidal hollow profile, or at least one undercut fastening groove (5) and in particular an associated, preferably peripheral, recess (6).

6. Fastening system according to Claim 4 or 5, **characterized in that** the profiled bar (1) has a rectangular cross section which is bounded substantially by a top side (2), an underside (3) and two longitudinal sides (4), wherein, in order to form at least one fastening groove (5) and/or at least one recess (6) in the region of the top side (2) and/or underside (3) and/or the longitudinal sides (4), in each case at least one T-profile (7) is formed.

7. Fastening system according to one of Claims 4 to 6, **characterized in that** the width of the groove or fastening groove (5) receiving the second fastening hook (20) of the fastening element (10) is dimensioned such that the screw (16) can be screwed in.

8. Fastening system according to one of Claims 4 to 7, **characterized in that** a flat profile (11) having a plurality of peripheral through-passage bores (12) has two parallel spaced-apart guide lugs (13) for the profiled bar (1), wherein preferably the guide lugs (13) are dimensioned for insertion into the peripheral recesses (6) in the profiled bar (1) and advantageously a flange (14) that extends out perpendicularly over one of the guide lugs (13) is integrally formed on the flat profile (11).

9. Fastening system according to one of Claims 4 to 7, **characterized in that** a roof hook (32) is coupled to the fastening element (10), in particular via a mounting bracket (36) which is connected both to the roof hook (32) and to the fastening element (10).

10. Fastening system according to one of Claims 4 to 7, **characterized in that** the fastening element (10) is connected to an either hook-shaped or substantially U-shaped clamping element (17).

11. Fastening system according to Claim 10, **characterized in that** the clamping element (17) holds at least one object on the profiled bar (1), in particular by means of the screw (16), by way of which the fastening element (10) is fixed.

12. Fastening system according to Claim 10 or 11, **characterized in that** the clamping element (17) has at least one projection (30) which rests on the object to be held, wherein preferably the clamping element (17) is kept at a distance from the fastening element (10) by means of a spring or clamping disc plugged onto the screw (16).

13. Fastening system according to one of Claims 5 to 14, **characterized in that** a solar module (31) is fastenable.

## Revendications

1. Elément de fixation quadratique de section transversale en particulier rectangulaire, auquel est associé un filetage (18), orienté perpendiculairement aux faces de base, pour une vis (16), deux crochets de fixation (19, 20) espacés l'un par rapport à l'autre partant depuis une face de base de l'élément de fixation (10), s'étendant sur la largeur de l'élément de fixation (10) et constituant des rainures d'accrochage (9) orientées parallèlement, **caractérisé en ce que** la branche arrière (21) du premier crochet de fixation (19) forme un prolongement d'un côté frontal (23) de l'élément de fixation (10) et l'extrémité libre de la branche de crochet (22) du deuxième crochet de fixation (20) se termine dans un plan avec le côté frontal opposé (23), la branche arrière (21) du deuxième crochet de fixation (20) étant de préférence adjacente au filetage (18) pour la vis (16).

2. Elément de fixation selon la revendication 1, **caractérisé en ce que** les crochets de fixation (19, 20) partent avec leurs branches arrière (21) depuis la face de base et les branches de crochet (22) pour la formation des rainures d'accrochage (9) sont tournées dans la même direction.

3. Elément de fixation selon la revendication 1, **caractérisé en ce que** le filetage (18) fait partie d'un écrou (26) qui est reçu de manière solidaire en rotation dans une rainure en contre-dépouille (25) et la surface d'appui (27) opposée à la surface de base tournée vers les rainures d'accrochage (9) présente un alésage traversant (24) pour la vis (16).

4. Système de fixation comprenant un élément de fixation (10) selon la revendication 1 et une barre profilée (1), qui présente au moins deux contre-dépouilles (8) correspondant aux rainures d'accrochage (9).

5. Système de fixation selon la revendication 4, **caractérisé en ce que** les contre-dépouilles (8) sont formées par deux rainures parallèles dans un profilé creux de forme quadratique ou par au moins une rainure de fixation (5) en contre-dépouille et notamment par une partie d'engagement associée (6), de préférence du côté du bord.

6. Système de fixation selon la revendication 4 ou 5, **caractérisé en ce que** la barre profilée (1) présente une section transversale rectangulaire qui est limitée essentiellement par un côté supérieur (2), un côté inférieur (3) et deux côtés longitudinaux (4), au moins un profilé en T (7) étant à chaque fois formé pour réaliser au moins une rainure de fixation (5) et/ou au moins une partie d'engagement (6) dans la région du côté supérieur (2) et/ou du côté inférieur (3) et/ou des côtés longitudinaux (4).

7. Système de fixation selon l'une quelconque des revendications 4 à 6, **caractérisé en ce que** la rainure ou la rainure de fixation (5) recevant le deuxième crochet de fixation (20) de l'élément de fixation (10) est dimensionnée en largeur de telle sorte que la vis (16) puisse être vissée.

8. Système de fixation selon l'une quelconque des revendications 4 à 7, **caractérisé en ce qu'**un profilé plat (11) avec plusieurs alésages traversants (12) du côté du bord présente deux ergots de guidage (13) espacés parallèlement l'un à l'autre pour la barre profilée (1), les ergots de guidage (13) étant de préférence dimensionnés pour être introduits dans les parties d'engagement (6) du côté du bord de la barre profilée (1) et avantageusement une bride (14) s'étendant perpendiculairement au-delà de l'un des ergots de guidage (13) étant façonnée sur le profilé plat (11).

9. Système de fixation selon l'une quelconque des revendications 4 à 7, **caractérisé en ce qu'**un crochet de toit (32) est accouplé à l'élément de fixation (10), notamment par le biais d'un coin de montage (36) qui est connecté d'une part au crochet de toit (32) et d'autre part à l'élément de fixation (10).

10. Système de fixation selon l'une quelconque des revendications 4 à 7, **caractérisé en ce que** l'élément de fixation (10) est connecté à un élément de serrage (17) soit en forme de crochet, soit essentiellement en forme de U.

11. Système de fixation selon la revendication 10, **caractérisé en ce que** l'élément de serrage (17) retient au moins un objet sur la barre profilée (1), notamment au moyen de la vis (16) avec laquelle l'élément de fixation (10) est fixé.

12. Système de fixation selon la revendication 10 ou 11, **caractérisé en ce que** l'élément de serrage (17) présente au moins une pièce (30) qui repose sur l'objet à retenir, l'élément de serrage (17) étant de préférence maintenu au moyen d'une rondelle de serrage ou d'un ressort enfilé sur la vis (16) à distance par rapport à l'élément de fixation (10).

13. Système de fixation selon l'une quelconque des revendications 5 à 14, **caractérisé en ce qu'**un module solaire (31) peut être fixé.
